# EUROPÄISCHE PATENTANMELDUNG

(11) **EP 2 327 886 A1**
(43) Veröffentlichungstag der Anmeldung: **01.06.2011**
(21) Anmeldenummer: 10014978.0
(22) Anmeldetag: 25.11.2010
(51) Int. Cl.: F16B 12/20, F16B 12/40, F16B 7/04

(54) **Lösbare Verbindung zwischen einem Hohlprofil und einem weiteren Profil**

(30) Priorität: 27.11.2009 AT 18892009
(71) Anmelder: Marchhart GmbH, 7201 Neudörfl (AT)
(72) Erfinder: Preissegger, Günter, 7033 Pöttsching (AT)

(57) **Zusammenfassung**

Die Erfindung betrifft eine lösbare Verbindung zwischen einem Hohlprofil und einem weiteren Profil, wobei bei hergestellter Verbindung eine Lasche, welche die Form eines flachen Plättchens aufweist vom Inneren eines Profils in das Innere des zweiten Profils ragt, an beiden Profilen verankert ist und durch einen Exzenterbolzen, welcher einerseits an einer Bohrung eines Profils, andererseits an einem Durchbruch der Lasche anliegt, unter Zugkraft setzbar ist, welche zwischen den Verankerungsstellen an beiden Profilen wirkt. In ein als Hohlprofil (1, 2) ausgebildetes Profil ist ein Einschubteil (6) eingeschoben, welcher im Hohlprofil (1, 2) nur in Profilrichtung beweglich ist. Sowohl ein Exzenterbolzen (5) als auch die Lasche (4, 14) verlaufen durch jeweils einen Durchbruch im Einschubteil (6).

## Beschreibung

Die Erfindung betrifft eine lösbare Verbindung zwischen einem Hohlprofil und einem weiteren Profil. Ein wichtiger Anwendungsfall ist die Bildung von optisch schönen Rahmen oder Gestellen für Möbel, insbesondere von Tischgestellen.

Gemäß der AT 414 031 B wird eine lösbare T-Verbindung zwischen zwei aufeinander stoßenden Profilen, von denen das endende Profil ein Hohlprofil ist, hergestellt, indem vom durchgehenden Profil aus ein damit durch Schweißen verbundener Fortsatz in das endende Hohlprofil stirnseitig eingesteckt wird und darin durch einen Bolzen fixiert wird, welcher sowohl durch eine Bohrung im Fort― satz als auch in der Mantelfläche des endenden Profils verläuft. Der Bolzen ist als Exzenterteil ausgebildet, durch Drehung um eine seiner beiden parallel zueinander liegenden Längsachsen wird der Fortsatz in das Hohlprofil hineingezogen.

Die beschriebene Verbindung ist fest, steif und komfortabel montier- und demontierbar. Mit einer leichten Abwandlung wäre sie auch für die Stirnverbindung von Profilen anwendbar. Nachteilig ist, dass zumindest an einem der beiden miteinander zu verbindenden Profile ein Teil angeschweißt werden muss. Dieses Schweißen bedeutet einen teuren zusätzlichen Arbeitsgang. Bei vielen Anwendungen, beispielsweise im Möbelbau, können Schweißnähte auch optisch stören.

Die der Erfindung zugrunde liegende Aufgabe besteht darin, eine lösbare Verbindung zwischen zwei Profilen, von denen zumindest ein Profil ein Hohlprofil ist, herzustellen. Die Verbindung soll einfach und rasch monzier- und demontierbar sein, sie soll keine über die Mantelflächen der Hohlprofile vorstehenden Teile aufweisen müssen und es soll nicht erforderlich sein, an den Profilen zu schweißen.

Zum Lösen der Aufgabe werden folgende Maßnahmen vorgeschlagen :
- Die beiden Profile werden durch eine Lasche aneinander gezogen, welche vom Inneren des ersten Profils in das Innere des zweiten Profils ragt.
- An jedem der beiden Profile ist die Lasche durch jeweils einen Bolzen gehalten, welcher sowohl durch eine Bohrung eines Profils verläuft, als auch durch eine Ausnehmung in der Lasche.
- In einem als Hohlprofil ausgebildeten Profil ist ein Einschubteil angeordnet, welcher darin nur in Profilrichtung beweglich ist. Er weist Schlitz auf, durch welchen die Lasche verläuft und er weist eine Bohrung auf, durch welche ein die Lasche haltender Bolzen verläuft.
- Zumindest einer der beiden Bolzen, welche durch eir.e Lasche verlaufen, ist derart als Exzenterbolzen ausgebildet und angeordnet, dass durch des Exzenterbolzens die Lasche durch die der Exzenterbolzen verläuft bewegbar ist und die beiden zu verbindenden Profile dadurch aneinander gezogen werden.

Die Erfindung wird anhand von Zeichnungen zu einem Ausführungsbeispiel veranschaulicht:
Fig. 1: zeigt in einer perspektivischen Explosionsdarstellung die an einer beispielhaften erfindungsgemäßen L-Verbindung zweier Hohlprofile mitwirkenden Teile.
Fig. 2: zeigt in einer perspektivischen Explosionsdarstellung die an einer beispielhaften erfindungsgemäßen Stirnverbindung zweier Hohlprofile mitwirkenden Teile.

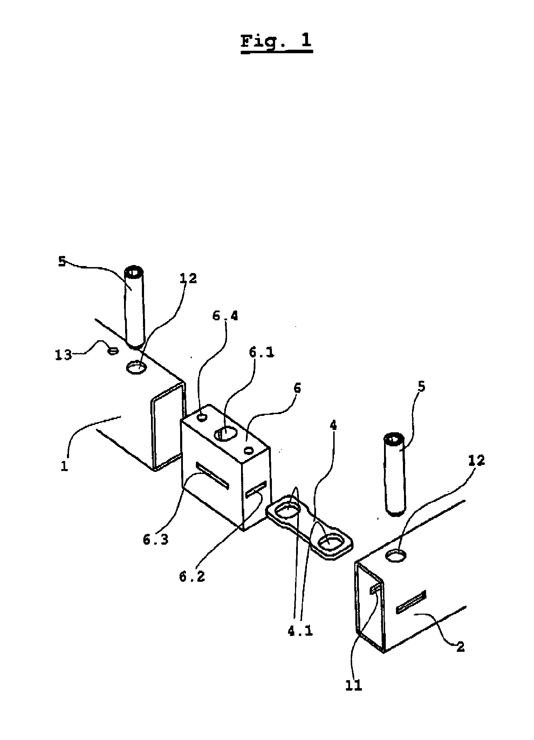

Gemäß Fig. 1 werden zwei Hohlprofile 1, 2 in einer L-Verbindung aneinander gefügt, wobei ein Hohlprofil 1 mit seiner Stirnseite an eine Mantelflächenseite eines zweiten Hohlprofils 2 stößt.

Bei hergestellter Verbindung ist in das Hohlprofil 1 ein Einschubteil 6 eingeschoben. Die dabei quer zur Profilrichtung des Holprofils 1 liegende Querschnittsfläche des Einschubteils 6 fluchtet mit der Innenkontur des Hohlprofils 1, sodass der Einschubteil 6 im Hohlprofil 1 nur parallel zur Profilrichtung bewegbar ist.

Der Einschubteil 6 ist durch eine Bohrung 6.1 durchbrochen, welche normal zur Profilrichtung des Holprofils 1 verläuft. In der gleichen Richtung ist das Hohlprofil 1 durch eine Bohrung 12 durchbrochen, welche also durch zwei gegenüberliegende Mantelflächenbereiche des Hohlprofils 1 verläufz Bei hergestellter Verbindung ist der Einschubteil 6 so weit in das Hohlprofil 1 eingeschoben, dass die Bohrungen 12 und 6.1 in der gleichen Linie verlaufen und ein Bolzen 5 ist durch beide Bohrungen hindurch gesteckt.

Im mittleren Längsbereich der Bohrung 6.1 ist der Einschubteil 6 neben der Bohrung 6.1 durch zwei weitere Durchbrüche 6.2, 6.3 durchbrochen. Diese beiden Durchbrüche weisen eine flache, rechteckförmige Querschnitzsform auf. Ein Durchbruch 6.2 verläuft bei hergestellter Verbindung parallel zur Richtung des Hohlprofils 1, der zweite Durchbruch 6.3 verläuft normal zur Richtung des Holprofils 1 und zur Richtung der Bohrung 6.1.

Eine an ihren beiden Endbereichen mit Durchbrüchen 4.1 versehene Lasche 4, welche etwa die Form eines flachen, länglichen Plättchens hat, ist bei hergestellter Verbindung mit einem Endbereich in den Durchbruch 6.2 des Einschubteils 6 eingesteckt. Durch den an diesem Endbereich befindlichen Durchbruch 4.1 verläuft der noch durch die Bohrungen 12 und 6.1 verlaufende Bolzen 5.

Das zweite Hohlprofil 2 weist ebenfalls eine zur Bohrung 12 lm. ersten Hohlprofil parallel liegende Bohrung 12 auf, welche durch zwei gegenüberliegende Mantelflächen der Holprofils 2 verläuft. In der Mitte zwischen dan beiden durch die Bohrung 12 gebildeten Mantelflächenöffnungen verläuft ein Durchbruch mit flach, rechteckiger Querschnittsform normal zur Bohrung 12 und zur Profilrichtung des Hohlprofils 2 durch das Hohlprofil 2 und bildet zwei an zueinander gegenüberliegenden Querschnittsflächenseiten angeordnete schlitzförmige Öffnungen 11 durch jeweils eine Mantelflächenseite des Hohlprofils 2.

Bei geschlossener Verbindung ist der zweite Endbereich der Lasche 4 durch die dem ersten Hohlprofil 1 zugewandte schlitzförmigen Öffnung 11 durchgesteckt und ein Bolzen 5, welcher durch die Bohrung 12 im zweiten Hohlprofil 5 verläuft, verläuft auch durch den an diesem Endbereich der Lasche 4 befindlichen Durchbruch 4.1 der Lasche.

Indem - wie weiter unten beschrieben - über die Lasche 4 zwischen den beiden Bolzen 5 eine Zugkraft übertragen wird, werder. die beiden Hohlprofile 1, 2 so aneinander gezogen, dass die Stirnseite des Holprofils 1 an einer Mantelflächenseite des Holprofils 2 unter Druck anliegt.

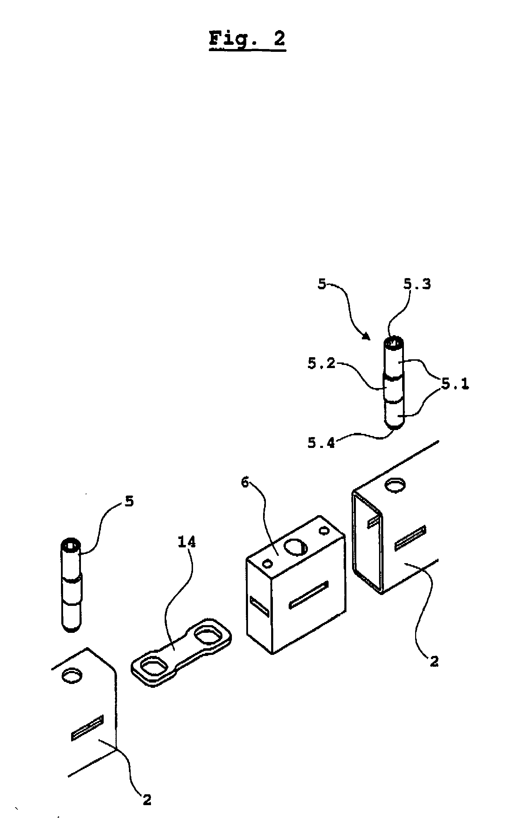

In analoger Weise werden gemäß Fig. 2 zwei Hohlprofile 2 stirnseitig miteinander verbunden. Die dabei vom Inneren eines Hohlprofils in das Innere des zweiten Hohlprofils ragende Lasche 14 verläuft bei diesem Ausführungsbeilspiel an beiden Hohlprofilen 2 durch deren Stirnfläche. Die Längsrichtung der Lasche 14 verläuft also parallel zur Profilrichtung beider Hohlprofile 2.

Wie in Fig. 2 besser als in Fig. 1 erkennbar, ist der Bolzen 5 als Exzenterbolzen ausgebildet. Zwischen zwei Längsbereichen 5.1, welche zueinander fluchtende Kreiszylinder gleichen Durchmessers sind, ist ein Längsbereich 5.2 angeordnet, welcher als Kreiszylinder mit größerem Durchmesser ausgebildet sein kann, dessen Achse parallel zur Achse der Kreiszylinder der Längsbereiche 5.1 liegt, wobei die zueinander parallel verschobenen Achsen um den Radiusunterschied der verschiedenen Kreiszylinder gegeneinander verschoben sind. Eine Stirnseite des Bolzens 5 ist als Eingriffsmulde für einen Schraubendreher, im dargestellten Bei― spiel für einen Sechskant-Schraubendreher ausgebildet.

Die zweite Stirnseite des Bolzens 5 ist als flacher Kreiszylinder 5.4 ausgebildet, welcher auf gleicher Achse wie die Kreiszylinder in den Längsbereichen 5.1 liegt und einen gegenüber diesen Kreiszylindern verringerten Durchmesser aufweist. Der Durchmesser der Bohrung 12 an jener Mantelflächenseite der Hohlprofile 1, 2 an denen die Stirnseite der Bolzen 5 mit dem kleinen flachen Kreiszylinder 5.4 bei geschlossener Verbindung zum Anliegen kommt, ist idealer Weise geringfügig größer als der Durchmesser des Kreiszylinders 5.4 und kleiner als der Durchmesser der Kreiszylinder an den Längsbereichen 5.1 des Bolzens 5.

Bei passender Dimensionierung der Längen der Laschen 4, 14 und der Abstände der Bohrungen 12 von der dem jeweils anderen Hohlprofil zugewandten Seite eines Hohlprofils, können zur Montage der Verbindung die Bolzen 5 einfach durch die Bohrungen 12 und 6.1 sowie durch die Durchbrüche 4.1 durchgesteckt werden. Durch Drehen der Bolzen 5 um die Achse der Längsbereiche 5.1 derart, dass die Längsbereiche 5.2 annähernd vom jeweils anderen Hohlprofil abgewandt zu liegen kommen, wird dann die Lasche 4, 14 unter Zug gesetzt und damit die zu verbindenden Hohlprofile aneinander gezogen.

Im Bereich des fachmännischen Handelns ist es problemlos möglich die einzelnen Längen und die Exzentrizität des Bolzens 5 passend festzulegen, sodass damit eine sichere und komfortabel herstellbare und lösbare Verbindung zwischen den Hohlprofilen ermöglicht wird. Deswegen wird hier nicht weiter auf die genaue Dimensionierung eingegangen.

Es ist nicht unbedingt nötig, zwei Exzenterbolzen 5 zu verwenden. Man kann die Lasche 4, 14 an einer Seite auch nicht einstellbar mit einem Hohlprofil verbinden, beispielsweise mittels eines einfachen zylindrischen Bolzens und nur an einem Hohlprofil einen Exzenterbolzen 5 anordnen.

Bei den meisten gängigen Anwendungen, insbesondere für Anwendungen im Möbelbau, bestehen die Hohlprofile aus Stahl oder Aluminium. Das Material der Bolzen 5 und der Laschen 4, 14 ist im NormaLfall Stahl.

Der Einschubteil 6 ist am besten als Kunststcffspritzgussteil herzustellen. Die wesentlichste Funktion des Einschubzeils 6 ist es, bei der Montage die Lasche 4, 14 in der richtigen Position zu halten. Der Durchbruch 6.2 dient zum Halten einer Lasche, welche parallel zur Profilrichtung eines Hohlprofils angeordnet wird. Der Durchbruch 6.3 dient zum Halten einer Lasche, welche normal zur Profilrichtung eines Hohlprofils angeordnet wird.

In den dargestellten Beispielen ist der Einschubteil 6 mit zusätzlichen Bohrungen 6.4 versehen, welche als Bohrung für eine gewindeschneidende Schraube dienen können, welche durch zu den Bohrung 6.4 fluchtende Bohrungen 13 durch eine Mantelfläche eines Hohlprofils verlaufen können. Derartig Schrauben können vor allem zur Befestigung weiterer Teile an der Außenseite der Mantelfläche eines Hohlprofils dienen, oder auch zur Befestigung des Einschubteils selbst, falls dieser für einen anderen, als den hier beschriebenen Zweck verwendet werden soll.

In dem Fall, dass miteinander in L―Anordnung oder T-Anoxdnung zu verbindende Profile nicht einfach rechteckige Querschnittsform aufweisen, sollte die Stirnseite des an der Mantelfläche des anderen Profils endenden Hohlprofils auf die ihm zugewandte Höhenkonzur der Mantelfläche zugeschnitten werden. Wenn also beispielsweise zwei Hohlprofile mit gleich großer kreisringförmiger Querschnittsfläche erfindungsgemäß miteinander zu einem L oder einem T verbunden werden sollen, sollte die Stirnseite des endenden Hohlprofils zu einer in Seitenansicht halbkreisförmigen Kontur geschnitten werden.

Es sind an Hohlprofile keinerlei Schweißarbeiten und keinerlei Umformarbeiten erforderlich um es für die erfindungsgemäße Verbindung auszubilden. Es sind nur Schnitte, Bohrungen oder Ausstanzungen vorzunehmen. Die erfindungsgemäße Verbindung ist damit vor allem dann besonders wirtschaftlich herstellbar, wenn die Hohlprofile durch einen sogenannten Rohrlaser zugeschnitten bzw. durchbrochen werden. (Ein sogenannter Rohrlaser ist eine Laserschneidmaschine, welche darauf hin spezialisiert ist, Hohlprofile zu handhaben und zu bearbeiter..)

## Patentansprüche

1. Lösbare Verbindung zwischen einem Hohlprofil und einem weiteren Profil, wobei bei hergestellter Verbindung eine Lasche, welche die Form eines flachen Plättchens aufweist vom Inneren eines Profils in das Innere des zweiten Profils ragt, an beiden Profilen verankert ist und durch einen Exzenterbolzen, welcher einerseits an einem Durchbruch eines Profils, andererseits an einem Durchbruch der Lasche anliegt, unter Zug― kraft setzbar ist, welche zwischen den Verankerungsstellen an beiden Profilen wirkt,
**dadurch gekennzeichnet, dass**
in ein als Hohlprofil (1, 2) ausgebildetes Profil ein Einschubteil (6) eingeschoben ist, welcher im Hohlprofil (1, 2) nur in Profilrichtung beweglich ist und dass sowohl ein Exzenterbolzen (5) als auch die Lasche (4, 14) durch jeweils einen Durchbruch im Einschubteil (6) verlaufen.

2. Verbindung nach Anspruch 1, **dadurch gekennzeichnet, dass** damit zwei Hohlprofile (1, 2) verbunden sind.

3. Verbindung nach Anspruch 2, **dadurch gekennzeichnet, dass** damit zwei Hohlprofile (1, 2) zu einem L oder einem T verbunden sind und dass die Lasche (4) durch einen Durchbruch (11) in einer Mantelflächenseite eines Hohlprofils (2) verläuft.
